# EUROPEAN PATENT APPLICATION

(11) **EP 4 556 399 A1**
(43) Date of publication of application: **21.05.2025**
(21) Application number: 24214013.5
(22) Date of filing: 19.11.2024
(51) Int. Cl.: B65D 85/78

(54) **NON-EDIBLE CAPSULE CONFIGURED FOR USE WITH A NOVELTY FROZEN CONFECTIONERY**

(30) Priority: 20.11.2023 NZ 23805755; 07.11.2024 US 202418940322
(71) Applicant: Zuru Edge Ltd, Kowloon (HK)
(72) Inventor: MOWBRAY, Nicholas James, Auckland (NZ); MOWBRAY, Mathew Peter, MID-LEVELS WEST (HK)
(74) Representative: Finnegan Europe LLP

(57) **Abstract**

The invention relates to a novelty frozen confectionery comprising a container containing a frozen confectionery; a non-edible capsule defining a compartment; a novelty item located in the compartment; and a removable wrapper that encompasses at least a portion of the container and at least a portion of the non-edible capsule to consolidate the capsule to the container in a removable manner.

## Description

### BACKGROUND

It is commonly desirable to package and present toys for sale or inspection. Conventionally toys may be packaged in clear plastic display packaging so that they can be seen and inspected prior to purchase. However, in some instances toys are deliberately presented in a format which prevents them from being seen or inspected prior to purchasing and opening the package, because doing so adds an element of surprise and interest upon discovering the contents of the package.

Toys packaged in this concealed manner may be packaged in combination with edible items such as confectionery, said combination being known to hold wide appeal. However, the types of confectionery or other edible items for which easily manufacturable toy-packaging configurations are known is limited, which limits the variety of options available for this type of product. It is desirable to develop new packaging configurations which combine edible items and toys in a way that is appealing and easily manufacturable.

It is an object of the present invention to provide a non-edible capsule which overcomes or at least partially ameliorates some of the abovementioned disadvantages or which at least provides the public with a useful choice.

### SUMMARY

This Summary is provided to introduce a brief description of some aspects of the disclosed embodiments in a simplified form that are further described below in the Detailed Description. This Summary is not intended to identify key features or essential features of the claimed subject matter, nor is it intended that this Summary be used to limit the scope of the claimed subject matter. Furthermore, the claimed subject matter is not limited to implementations that solve any or all disadvantages noted in any part of this disclosure.

In a first aspect the present invention may broadly be said to be a novelty frozen confectionery, comprising:
a container containing a frozen confectionery;
a non-edible capsule defining a compartment,
a novelty item located in the compartment, and
a removable wrapper that encompasses at least a portion of the container and at least a portion of the non-edible capsule to consolidate the capsule to the container in a removable manner.

In another aspect the capsule may comprise a first portion comprising an opening through which the novelty item can pass.

In another aspect the opening may be occluded by the container when the non-edible capsule is consolidated to the container to thereby define the compartment, and the opening is exposed when the non-edible capsule is removed from the container to allow the novelty item to be removed from the compartment through the opening.

In another aspect the capsule may further comprise a second portion removably or moveably attached to the first portion, the first portion and second portion adapted and configured to be able to define an openable enclosed said compartment;
wherein the novelty item is located in the enclosed compartment formed by the first portion and the second portion; and
the removable wrapper encompasses at least a portion of the container and at least a portion of at least one of the first and second portions to consolidate the container to the capsule in a removable manner.

In another aspect the first portion may define the substantial part of the compartment and comprises an opening able to be closed by the second portion and via which the novelty item can be removed from the compartment when the second portion is moved or removed to open the opening of the first portion.

In another aspect the first portion may comprise of a hood and the second portion comprises of a closure that is moveably or removable attached to the hood.

In another aspect the opening of the first portion may have a perimeter shape that is complementary to the perimeter shape of an exposed portion of the frozen confectionery in the container.

In another aspect the perimeter shape of the opening may be the same as the perimeter shape of the exposed portion of the frozen confectionery in the container.

In another aspect the opening may have a diameter that is the same as the diameter of the exposed portion of the frozen confectionery in the container.

In another aspect the second portion may comprise a surface in contact with the exposed portion of the frozen confectionery, the surface having a perimeter that is the same as the perimeter of the exposed portion of the frozen confectionery.

In another aspect the second portion may comprise a circular surface in contact with the exposed portion of the frozen confectionery, the circular surface having a diameter that is the same as the diameter of the exposed portion of the frozen confectionery.

In another aspect the surface may be configured with a swirl pattern.

In another aspect the surface may be planar.

In another aspect the second portion may further comprise an outer edge, the outer edge comprising one or more ridges configured to mate with ridges inside the open end of the first portion to index the first portion to the second portion.

In another aspect the ridges may be configured to resist (but not prevent) removal of the first portion from the second portion.

In another aspect the first portion may further comprise a peripheral lip located adjacent the container and wherein the removable wrapper envelops the lip.

In another aspect the peripheral lip may extend about the opening of the first portion.

In another aspect the second portion may further comprise an outer edge having a tab located thereupon.

In another aspect an outer periphery of the first portion may comprise a cutout adapted and configured so that the tab is accessible through the cutout.

In another aspect an outside circumference of the opening of the hood may comprise a cutout, wherein the tab is accessible through the cutout.

In another aspect the first portion may be generally of a shape selected from one of:
(a) a hemispherical dome,
(b) a faceted cover,
(C) a simulated single, double or tipple ice cream scoop shape,
(d) a crown,
(e) a cylinder.

In another aspect the novelty item may be a toy.

In another aspect the novelty item may be wholly contained in the capsule.

In another aspect the novelty item may be a unitary item.

In another aspect the novelty item may comprise of individual components able to be assembled into an item once removed from the capsule.

In another aspect individual components may be contained in a flexible pouch inside the capsule.

In another aspect the container may be an at least partially edible container.

In another aspect the container may be an entirely edible container.

In another aspect the container may be a cone.

In another aspect the container may be a waffle cone.

In another aspect the container may be a non-edible container.

In another aspect the container may be a non-edible container of a cellulose-based material.

In another aspect the container may be of a shape selected from one of (a) conical shape, (b) frustoconical shape and (c) cylindrical shape.

In another aspect the first and second portions may be threadedly engaged to each other.

In another aspect the first and second portions may be push-fit engaged to each other.

In another aspect the first and second portions may be snap-fit engaged to each other.

In another aspect the first and second portions may be frangibly engaged to each other.

In another aspect the first and second portions may be tear-away engaged to each other.

In another aspect the first and second portions may be adhesive tack-engaged to each other.

In another aspect the first and second portions may be hingedly engaged to each other.

In another aspect the first and second portions may be hingedly engaged to each other utilizing a live hinge.

In another aspect the removeable wrapper may comprise of a shrink or elastic wrap to facilitate the consolidation of the container to the capsule.

In another aspect the removable wrapper may extend over the entire capsule.

In another aspect the removeable wrapper may include a frangible region to facilitate the removing of the wrapper from the container and capsule.

In another aspect the container may comprise a top opening at where the frozen confectionery is able to be exposed for consumption.

In another aspect the top opening may be defined by a rim of the container.

In another aspect the capsule may be seated onto the rim of the container.

In another aspect the capsule may be seated onto the rim of the container in a manner to conceal the top opening and the frozen confectionery in the container.

In another aspect the invention may broadly be said to be a method of manufacturing a novelty frozen confectionery, the method comprising:
filling a container with frozen confectionery;
inserting a novelty item into a compartment of a non-edible capsule;
seating the capsule above the container; and
applying a removable wrapper to encompass at least a portion of the container and at least a portion of the non-edible capsule to thereby consolidate the capsule to the container in a removable manner.

The method of claim 48, wherein the capsule comprises a surface configured with a swirl pattern, and seating of the capsule involves pressing it into an exposed portion of the frozen confectionery to form a complementary swirl patten in the exposed portion.

The method of claim 49, wherein pressing the capsule into the exposed portion of the frozen confectionery is performed before the frozen confectionery is fully frozen.

The term "comprising" as used in this specification means "consisting at least in part of'. When interpreting each statement in this specification that includes the term "comprising", features other than that or those prefaced by the term may also be present. Related terms such as "comprise" and "comprises" are to be interpreted in the same manner.

### BRIEF DESCRIPTION OF THE DRAWINGS

In order that the disclosure may be understood in detail, a more particular description of the disclosed embodiments is made by reference to specific embodiments thereof which are illustrated in the appended drawings and described in the following detailed description. In the drawings:
FIG. 1A is a front view of the novelty frozen confectionery.
FIG. 1B is an exploded perspective view of the novelty frozen confectionery.
FIG. 1C is a bottom perspective view of the capsule when assembled.
FIG. 1D is a top perspective view of the capsule when assembled.
FIG. 1E is a front view of the capsule when assembled.
FIG. 1F is an exploded perspective view of the capsule.
FIG. 1G is a perspective view of the novelty frozen confectionery with its removable wrapper being peeled away.
FIG. 2A is an exploded perspective view of an alternative embodiment of the capsule wherein the second portion lacks a swirl pattern.
FIG. 2B is a bottom perspective view of the capsule of Fig. 2A when assembled.
FIG. 3A is an exploded perspective view of an alternative embodiment of the capsule wherein the first portion is shaped as a crown.
FIG. 3B is a bottom perspective view of the capsule of Fig. 3A when assembled.
FIG. 4A is an exploded perspective view of an alternative embodiment of the capsule wherein the first portion is shaped as a gem.
FIG. 4B is a bottom perspective view of the capsule of Fig. 4A when assembled.
FIG. 5A is an exploded perspective view of an alternative embodiment of the capsule wherein the first portion is shaped as an ellipsoid.
FIG. 5B is a bottom perspective view of the capsule of Fig. 5A when assembled.
FIG. 6A is an exploded perspective view of an alternative embodiment of the capsule wherein the first portion is shaped as a truncated cone.
FIG. 6B is a bottom perspective view of the capsule of Fig. 6A when assembled.
FIG. 7A is an exploded perspective view of an alternative embodiment of the capsule wherein the first portion is shaped as a cylinder.
FIG. 7B is a bottom perspective view of the capsule of Fig. 7A when assembled.
FIG. 8A is an exploded perspective view of an alternative embodiment of the capsule wherein the first portion is shaped as a cone.
FIG. 8B is a bottom perspective view of the capsule of Fig. 8A when assembled.
FIG. 9A is an exploded perspective view of an alternative embodiment of the capsule wherein the first portion is shaped as two vertically conjoined ellipsoids.
FIG. 9B is a bottom perspective view of the capsule of Fig. 9A when assembled.
FIG. 10A is an exploded perspective view of an alternative embodiment of the capsule wherein the first portion is shaped as three vertically conjoined ellipsoids.
FIG. 10B is a bottom perspective view of the capsule of Fig. 10A when assembled.
FIG. 11A is an exploded perspective view of an alternative embodiment of the capsule wherein the first portion is shaped as three conjoined ellipsoids in a triangular arrangement.
FIG. 11B is a bottom perspective view of the capsule of Fig. 11A when assembled.
FIG. 12A is a front view of an alternative embodiment of the novelty frozen confectionery wherein the container for the frozen confectionery is a cup.
FIG. 12B is a partially exploded front view of the novelty frozen confectionery of Fig. 12A showing the rim of the cup upon which the capsule mounts.

### DETAILED DESCRIPTION

In the following detailed description, references are made to the accompanying drawings that form a part hereof, and which are shown by way of illustration specific configurations or examples. Referring now to the drawings, in which like numerals represent like elements throughout the several FIGS., aspects of a novelty frozen confectionery will be described.

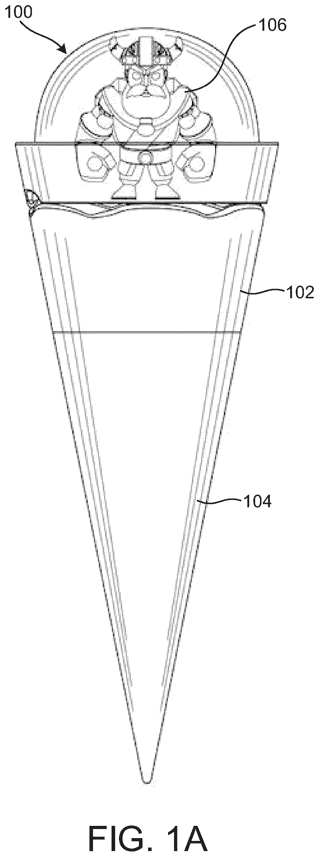

The novelty frozen confectionery, as illustrated in Figures 1A-12B, comprises a non-edible capsule 100 containing a novelty item 106 and a container 104 containing frozen confectionery 102. The non-edible capsule 100 and how it is configured for use with the novelty frozen confectionery is of particular importance.

As shown in Fig. 1A, in one embodiment of the novelty frozen confectionery the container 104 is an edible container, specifically an ice cream cone. The capsule 100 defines a compartment within which the novelty item 106 is located, and the capsule 100 sits above the container 104.

In this embodiment, the capsule 100 has no direct contact with the container 104 i.e. the ice cream cone, and instead sits atop the frozen confectionery 102 (which extends beyond the container 104). A divider (e.g. a paper disc) may be provided between the capsule 100 and the frozen confectionery 102, such that they are not in direct contact.

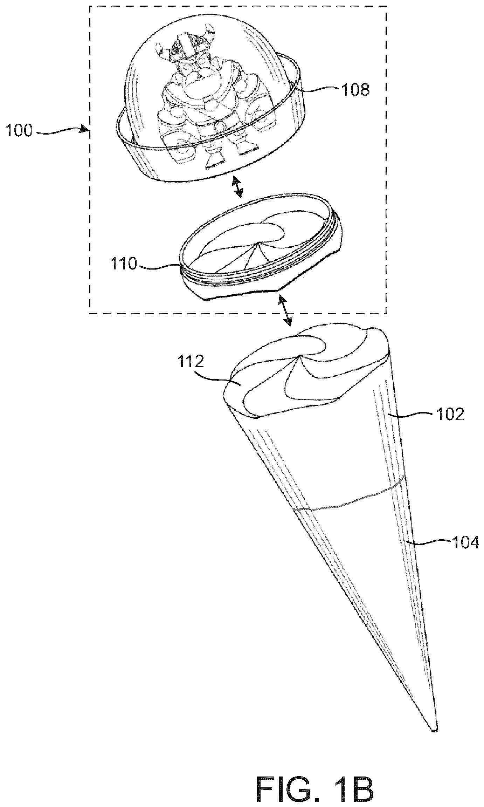

As shown in Fig. 1B, the capsule 100 may comprise a first portion 108 and a second portion 110 which are removably attached together to define the compartment for the novelty item 106. The capsule 100 is removable from the container 104 and the frozen confectionery 102 contained therein.

However, the first portion 108 and second portion 110 may not necessarily be fully removable from one another and may merely be moveably attached together, for example by a hinged connection such as a live hinge.

The first portion 108 is shaped to provide the majority of the interior volume of the compartment which contains the novelty item 106, and may be considered a hood. In this embodiment the first portion 108 is substantially shaped as a hemispherical dome.

The second portion 110 sits above an exposed portion 112 of the frozen confectionery 102 filling the container 104, and may directly contact the exposed portion 112. The second portion 110 may be considered a closure for the hood (i.e. the first portion 108).

The section of the frozen confectionery 102 which extends beyond the container 104 in this embodiment may have sides parallel to the cone, such that the frozen confectionery 102 is a continuation of the conical shape of the container 104. This section terminates in the exposed portion 112, which is effectively the end face of the cone shape.

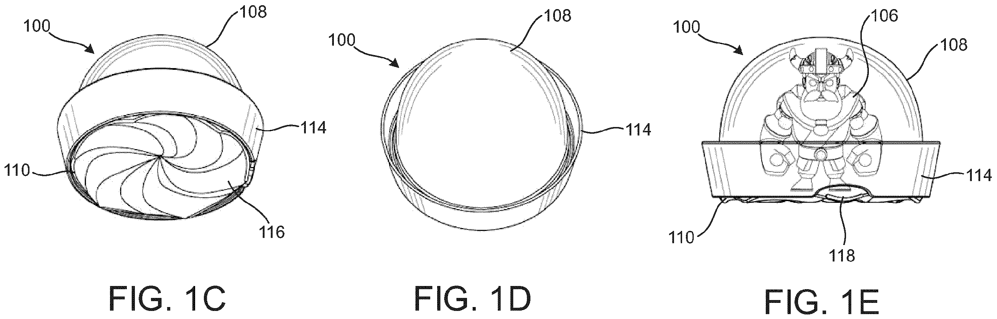

As shown in Fig. 1C, the first portion 108 comprises an open end within which the second portion 110 can seat. Thus, removal of the second portion 110 from the open end provides access to the novelty item 106. The perimeter shape of the open end preferably approximately matches the perimeter shape of the exposed portion 112 of the frozen confectionery 102, which is circular for an ice cream cone. Thus, their diameters may be approximately the same.

Likewise, the second portion 110 comprises a surface 116 with a perimeter that approximately matches that of the exposed portion 112 of the frozen confectionery 102, which is circular for an ice cream cone. In this embodiment, the surface 116 is configured with a swirl pattern which may be complementary to a swirl pattern formed in the exposed portion 112 of the frozen confectionery 102.

The swirl pattern in the surface 116 may itself form the complementary swirl patten in the exposed portion 112 of the frozen confectionery 102 by pressing the two together during manufacture. This may occur if the capsule 100 is seated on to the exposed portion 112 before the frozen confectionery 102 has fully frozen.

As shown in Figs. 1C and 1D, the first portion 108 may comprise a peripheral lip 114 about the open end, which may surround the primary shape (e.g. the hemisphere as shown) formed by the first portion 108. The peripheral lip 114 may be disposed at an angle which matches that of the container 104 - thus it may effectively act as a continuation of the conical shape of the container 104 (and of the section of the frozen confectionery 102 that extends therefrom).

As shown in Fig. 1E, second portion 110 preferably comprises a tab 118 located upon its outer edge. The tab 118 may facilitate easier manual separation of the first portion 108 and the second portion 110. The first portion 108 may also comprise a cutout formed in its outer circumference (including in the peripheral lip 114), with the tab 118 being accessible through the cutout.

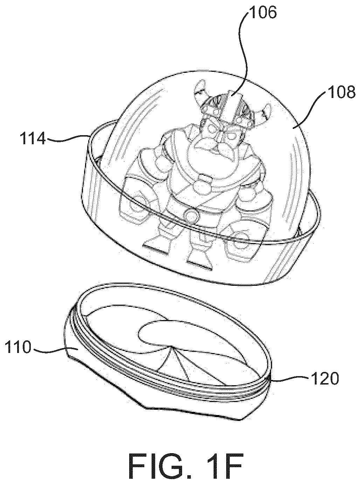

As shown in Fig. 1F, the second portion 110 may comprise one or more ridges 120 at its outer edge, the ridges 120 being configured to mate with ridges inside the open end of the first portion 108. This facilitates releasable attachment therebetween while achieving a sufficient degree of retention. The engagement is thus effectively a push fit or a snap fit. Alternative means of engagement may include a threaded connection, a frangible connection, an adhesive tack connection, or a tear away connection.

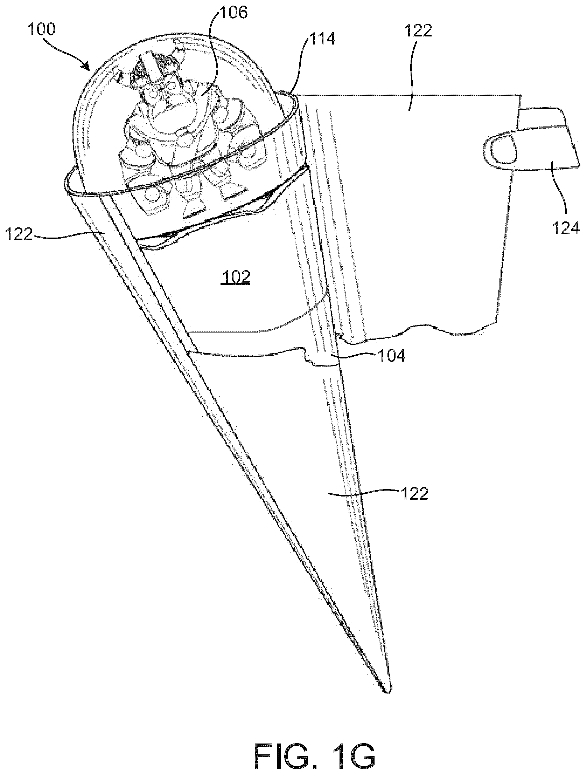

As shown in Fig. 1G, the novelty frozen confectionery preferably further comprises a removable wrapper 124 which encompasses the container 104 and at least a portion of the capsule 100. The capsule 100 is thereby consolidated to the container 104 by the removable wrapper 124.

Preferably, the removable wrapper 124 sits flat against the ice cream cone and the peripheral lip 114 (if angled as previously described), which together form an effectively continuous cone. The removeable wrapper 124 may be folded over a lip of the peripheral lip 114 to improve the degree of consolidation, or it might instead extend over the entire capsule 100.

The removable wrapper 124 may be at least partially adhered to the capsule 100 to improve the degree of consolidation, for example it may be adhered to the peripheral lip 114.

In use, a consumer 124 can peel away the removable wrapper 124 to free the capsule 100 from the container 104 (i.e. the ice cream cone). By removing the capsule 100, the consumer 124 gains access to the frozen confectionery 102 for consumption. The consumer 124 can then detach the second portion 110 from the first portion 108 to gain access to the novelty item 106.

The removable wrapper 124 may include a frangible region to facilitate removal. It may comprise of a shrink or elastic wrap to facilitate the consolidation of the container 104 to the capsule 100.

The novelty item 106 may be a toy, for example a figurine. However, various other items might be suitable subject to space constraints, including edible items such as a secondary form of confectionery. The novelty item 106 may be a unitary item, or it may comprise individual components able to be assembled once removed from the capsule 100. Such components may be provided in a flexible pouch inside the capsule 100.

In the embodiment shown above, the capsule 100 fully encloses the novelty item 106 i.e. the compartment is defined solely by the capsule 100, specifically its first portion 108 and second portion 110. However, in alternative embodiments the capsule 100 may only fully enclose the novelty item 106 together with the container 104, i.e. together they define the compartment.

The non-edible capsule 100 is preferably made from plastic, but could alternatively be made from some other food-safe material. It may be injection molded or made using some other manufacturing technique.

The frozen confectionery 102 is preferably ice cream, but could alternatively be sorbet, ice milk, frozen yogurt, or any other suitable frozen confectionery. It may incorporate other forms of confectionery or edible items as toppings or distributed throughout, for example gummies, chocolate, nuts, or syrup. The container 104, which in this embodiment is an edible cone, may be a waffle cone.

The frozen confectionery 102 and its container 104 may be manufactured together in a typical way as is known in the art for pre-packaged frozen confectionaries in cones, with the difference in manufacturing method residing in the consolidation of the capsule 100 with the container 104 in the packaging process.

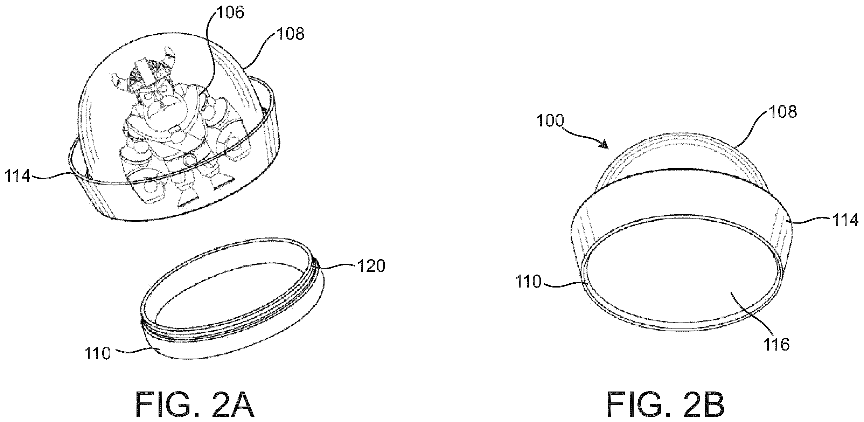

Fig. 2A and 2B show an alternative embodiment of the capsule 100 wherein the surface 116 of the second portion 110 is planar, instead of having a swirl pattern.

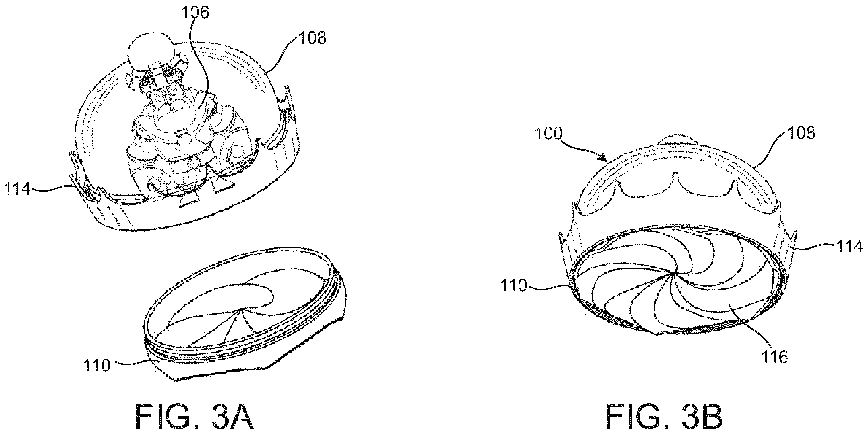

Figures 3A through 11B show various alternative embodiments of the capsule 100, differing only in the shape of their first portion 108. It will be appreciated that such variations in shape may be primarily aesthetic, and many more shapes than those depicted might be suitable for the first portion 108, but each variation shown shall herein be briefly described.

Figures 3A and 3B show an alternative embodiment of the capsule 100 wherein the first portion 108 is shaped as a crown. The peripheral lip 114 is ridged in order to mimic a crown, but is still angled such that it can act as a suitable surface for contact with the removable wrapper 124.

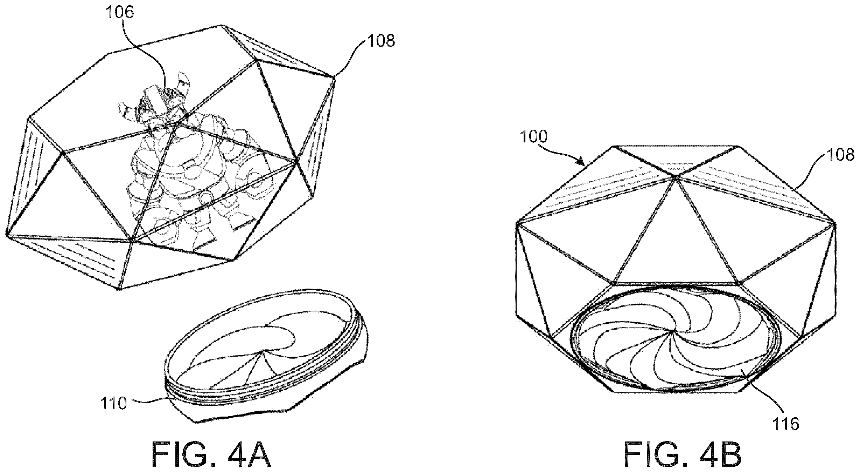

Figure 4A and 4B show an alternative embodiment of the capsule 100 wherein the first portion 108 is shaped as a gem, which could also be considered a faceted cover. This embodiment lacks a peripheral lip 114, although faces of the gem shape may act as contact surfaces for the removable wrapper 124. The shape of the open end of the first portion 108 remains circular to match the container 104.

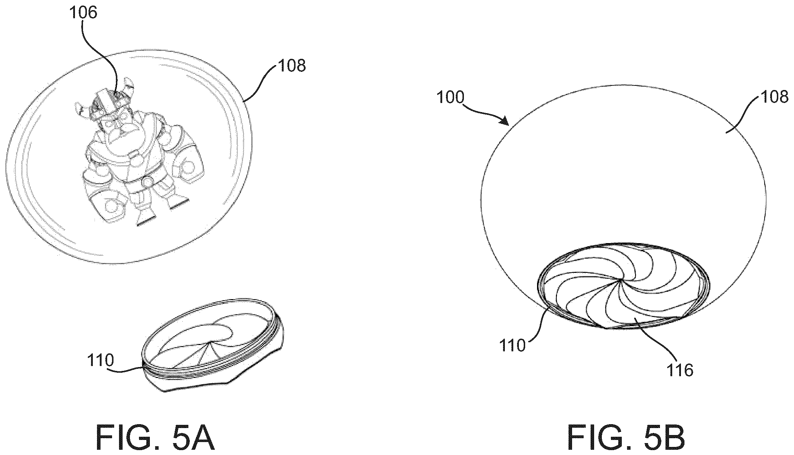

Figures 5A and 5B show an alternative embodiment of the capsule 100 wherein the first portion 108 is shaped as an ellipsoid (truncated by the open end). The shape may be configured to resemble a 'single scoop' of ice cream. This embodiment lacks a peripheral lip 114.

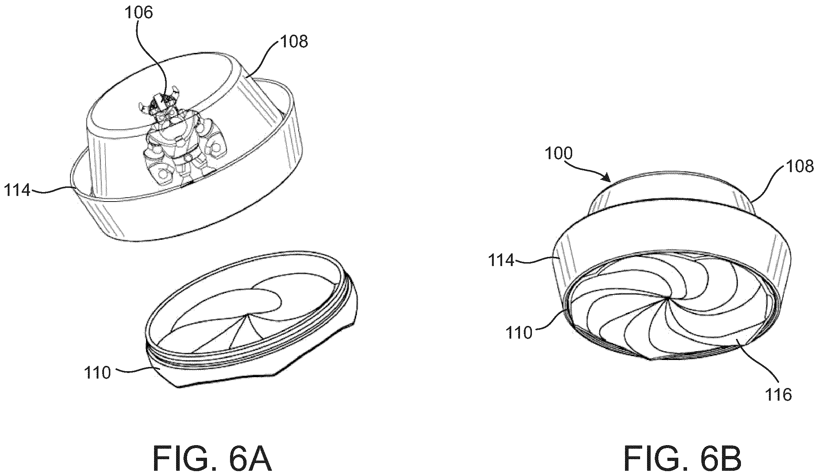

Figures 6A and 6B show an alternative embodiment of the capsule 100 wherein the first portion 108 is shaped as a truncated cone.

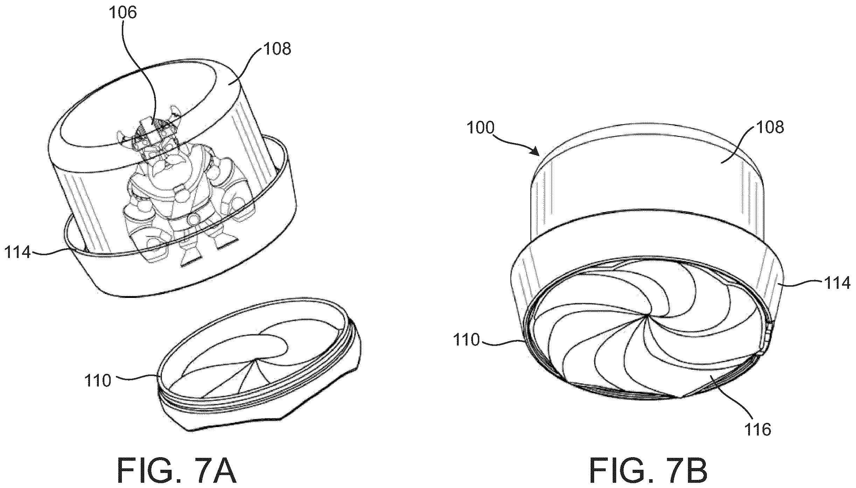

Figures 7A and 7B show an alternative embodiment of the capsule 100 wherein the first portion 108 is shaped as a cylinder (which may have a rounded edge).

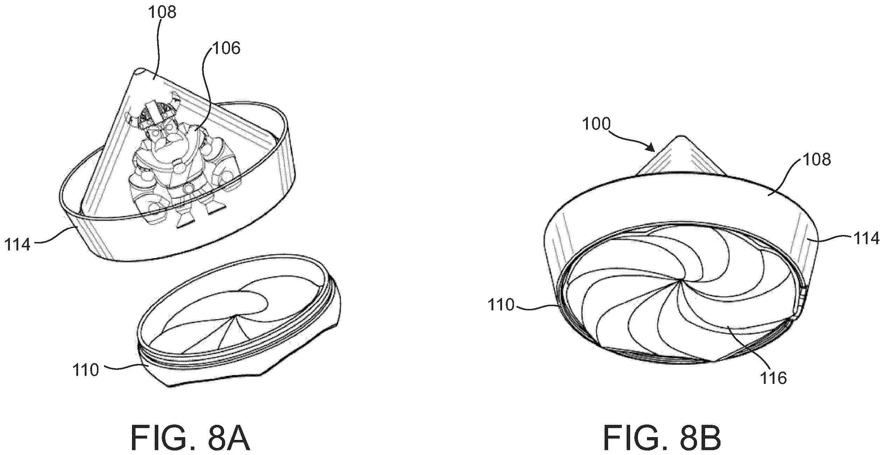

Figures 8A and 8B show an alternative embodiment of the capsule 100 wherein the first portion 108 is shaped as a cone.

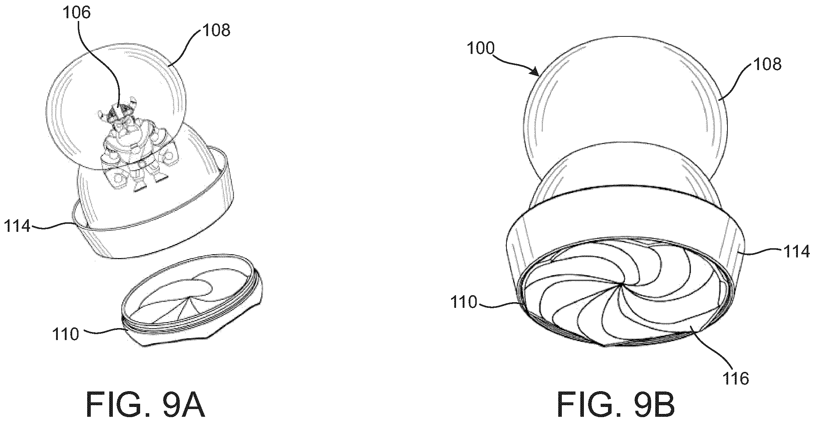

Figures 9A and 9B show an alternative embodiment of the capsule 100 wherein the first portion 108 is shaped as two vertically conjoined ellipsoids (one being truncated by the open end). The shape may be configured to resemble a 'double scoop' of ice cream.

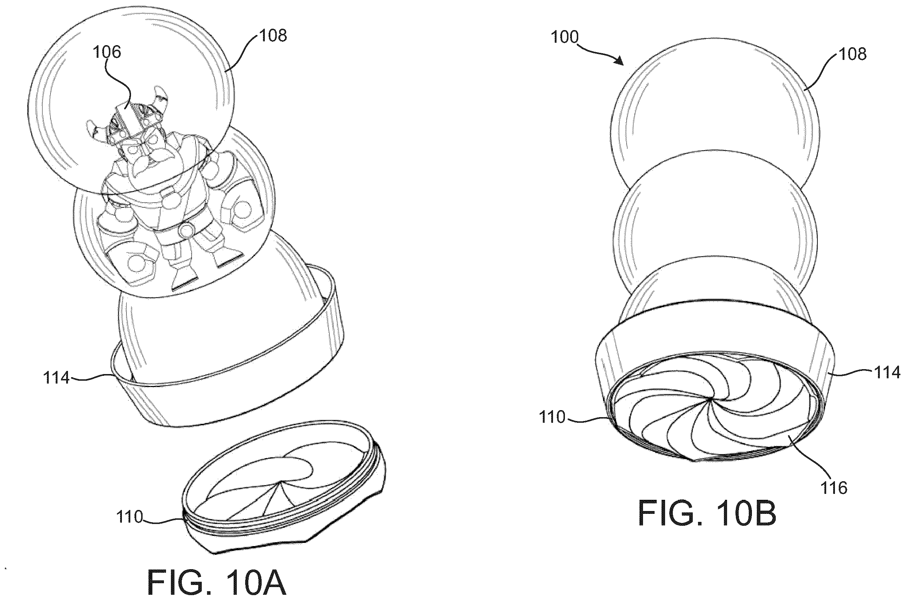

Figures 10A and 10B show an alternative embodiment of the capsule 100 wherein the first portion 108 is shaped as three vertically conjoined ellipsoids (one being truncated by the open end). The shape may be configured to resemble a `triple scoop' of ice cream.

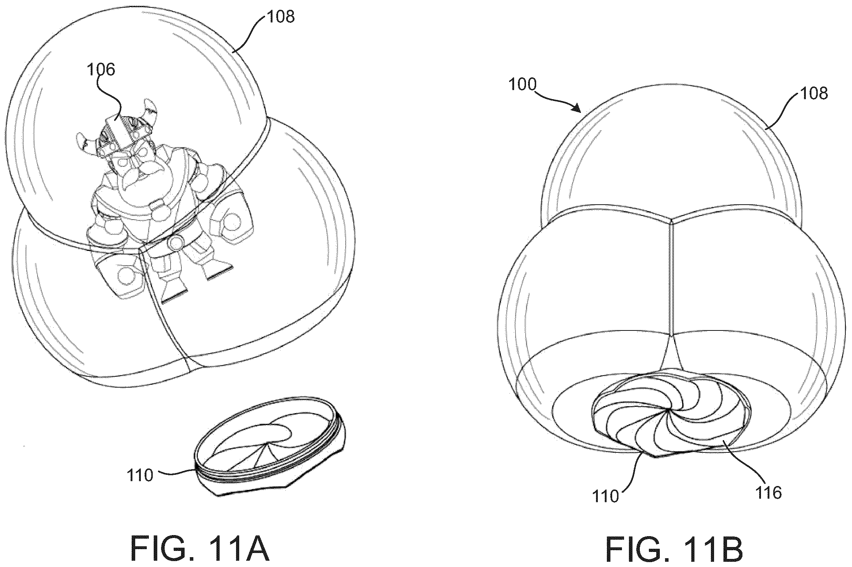

Figures 11A and 11B show an alternative embodiment of the capsule 100 wherein the first portion 108 is shaped as three conjoined ellipsoids in a triangular arrangement. The open end is formed in two of the ellipsoids. The shape may be configured to resemble a triangular `triple scoop' of ice cream.

All of the embodiments of Figures 6A through 11B also have the peripheral lip 114 surrounding the primary shape of the first portion 108.

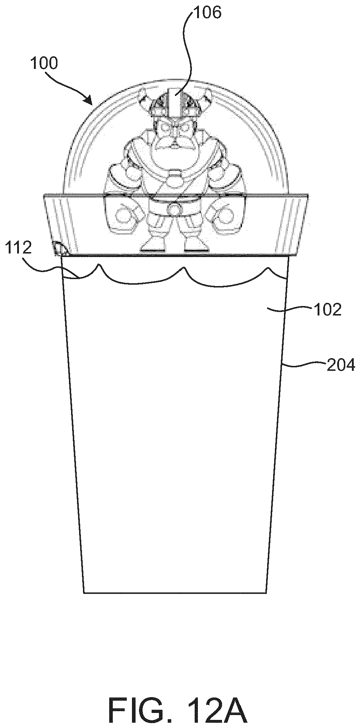

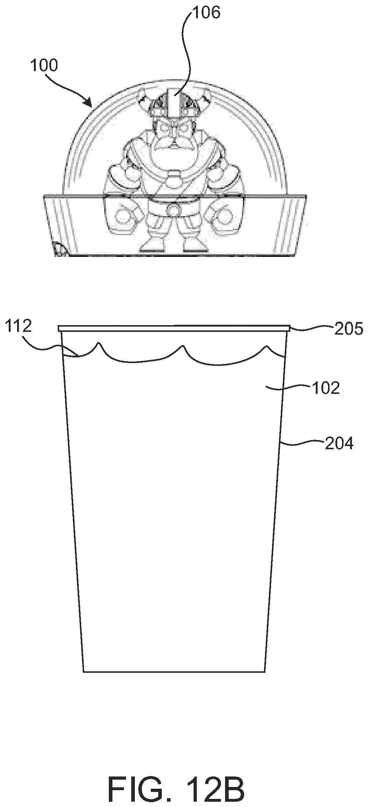

As shown in Fig. 12A, in another embodiment of the novelty frozen confectionery, the container 104 is a non-edible container 204, for example a cup, which contains the frozen confectionery 102. The capsule 100 is consolidated with the non-edible container in a manner that may differ from the edible container (i.e. ice cream cone) embodiment previously described.

As shown in Fig, 12B, the non-edible container preferably comprises a container rim 205 upon which the capsule 100 seats. The capsule 100 may be adapted to releasably engage with the container rim 205, for example using a groove formed between the first portion 108 and second portion 110, or by using a shroud extending from the first portion 108 such that the capsule 100 can connect in the same way as a conventional plastic lid might.

Alternatively, the capsule 100 may seat at least partially inside the container rim 205, for example the peripheral lip 114 may seat at least partially inside the container rim 205 and an angle of the container walls may prevent the capsule 100 from slipping below a certain height.

For certain purposes, releasable engagement of the capsule 100 with the container rim 205 may be a sufficient degree of consolidation between the capsule 100 and the non-edible container 204 (e.g. the cup) such that a removable wrapper 124 is unnecessary. For example, the novelty frozen confectionery may be prepared and served at a restaurant by filling the non-edible container with frozen confectionery 102 and then affixing the capsule 100 to the container rim 205.

However, if the novelty frozen confectionery is to be manufactured as a pre-packaged product suitable for shipping and distribution, it may be preferable to improve the degree of consolidation between the non-edible container 204 and the capsule 100 by application of a removable wrapper 124 in a manner equivalent to that previously described in relation to the ice cream cone.

The capsule 100 may be substantially identical when configured for use with a non-edible container 204 as for an ice cream cone, although it may differ in size and shape or be modified for engagement with the container rim 205 as described above.

However, use with a non-edible container 204 may facilitate some alternative configurations of the capsule 100. For example, the capsule 100 might not be formed from a first portion 108 and a second portion 110 removably attached together. Instead, the capsule 100 may comprise only the first portion 108, and it may define the compartment for the novelty item 106 in a different way together with the non-edible container 204.

To give a more specific example, the non-edible container 204 may comprise peel ply heat-sealed to its container rim 205. The capsule 100 i.e. the first portion 108 may then seat above the peel ply, such that the novelty item 106 locates therebetween and remains separated from the frozen confectionery 102. Thus, the compartment is defined by the peel ply and the first portion 108. Once the first portion 108 has been removed to allow for access to the novelty item 108, the peel ply can subsequently be peeled off to allow access to the frozen confectionery 102.

In any case, any of the previously described shapes of the first portion 108 could also be applied to the capsule 110 for this embodiment.

Preferably, the non-edible container 204 is made from plastic, and is preferably shaped as a cup i.e. frustoconical. However, it may also be a paper cup, or have some other shape from which the frozen confectionery 102 can be eaten. For example, the non-edible container 204 could be cylindrical or conical.

This invention may also be said broadly to consist in the parts, elements and features referred to or indicated in the specification of the application, individually or collectively, and any or all combinations of any two or more said parts, elements or features, and where specific integers are mentioned herein which have known equivalents in the art to which this invention relates, such known equivalents are deemed to be incorporated herein as if individually set forth.

Based on the foregoing, it should be appreciated that a novelty frozen confectionery and a capsule 100 thereof has been disclosed herein. It is also to be appreciated that the subject matter described above is provided by way of illustration only and should not be construed as limiting. Various modifications and changes can be made to the subject matter described herein without following the example configurations and applications illustrated and described, and without departing from the scope of the present disclosure, which is set forth in the following claims. The invention may be embodied in other specific and unmentioned forms, apparent to the skilled artisan, without departing from the spirit or essential attributes thereof, and it is therefore asserted that the foregoing embodiments are in all respects illustrative and not to be construed as limiting.

References to relative terms such as upper and lower, front and back, top and bottom, left and right, or the like, are intended for convenience of description and are not contemplated to limit the disclosure presented herein, or its components, to any specific orientation. All dimensions depicted in the figures may vary with a potential design and the intended use of a specific embodiment of the disclosed subject matter without departing from the scope thereof.

Each of the additional features and methods disclosed herein may be used separately, or in conjunction with other features and methods, to provide the disclosed functionality or additional functionality and methods for making and using the same. Therefore, combinations of features and methods disclosed herein may not be necessary to practice the invention in its broadest sense and are instead disclosed merely to particularly describe representative and preferred embodiments of the instant invention.

Also disclosed herein are the following clauses: Clause 1. A novelty frozen confectionery, comprising:
a container containing a frozen confectionery;
a non-edible capsule defining a compartment;
a novelty item located in the compartment; and
a removable wrapper that encompasses at least a portion of the container and at least a portion of the non-edible capsule to consolidate the capsule to the container in a removable manner.

Clause 2. The novelty frozen confectionery of clause 1 wherein the capsule comprises a first portion comprising an opening through which the novelty item can pass.

Clause 3. The novelty frozen confectionery of clause 2, wherein the opening is occluded by the container when the non-edible capsule is consolidated to the container to thereby define the compartment, and the opening is exposed when the non-edible capsule is removed from the container to allow the novelty item to be removed from the compartment through the opening.

Clause 4. The novelty frozen confectionery of clause 2 wherein the capsule further comprises a second portion removably or moveably attached to the first portion, the first portion and second portion adapted and configured to be able to define an openable enclosed said compartment;
wherein the novelty item is located in the enclosed compartment formed by the first portion and the second portion; and
the removable wrapper encompasses at least a portion of the container and at least a portion of at least one of the first and second portions to consolidate the container to the capsule in a removable manner.

Clause 5. The novelty frozen confectionery of clause 4 wherein the first portion defines the substantial part of the compartment and comprises an opening able to be closed by the second portion and via which the novelty item can be removed from the compartment when the second portion is moved or removed to open the opening of the first portion.

Clause 6. The novelty frozen confectionery of clause 4 or 5 wherein the first portion comprises of a hood and the second portion comprises of a closure that is moveably or removably attached to the hood.

Clause 7. The novelty frozen confectionery of any one of clause 2 to 6 wherein the opening of the first portion has a perimeter shape that is complementary to the perimeter shape of an exposed portion of the frozen confectionery in the container.

Clause 8. The novelty frozen confectionery of clause 7 wherein the perimeter shape of the opening is the same as the perimeter shape of the exposed portion of the frozen confectionery in the container.

Clause 9. The novelty frozen confectionery of clause 8 wherein the opening has a diameter that is the same as the diameter of the exposed portion of the frozen confectionery in the container.

Clause 10. The novelty frozen confectionery of any one of clause 3 to 9 wherein the second portion comprises a surface in contact with the exposed portion of the frozen confectionery, the surface having a perimeter that is the same as the perimeter of the exposed portion of the frozen confectionery.

Clause 11. The novelty frozen confectionery of clause 10 wherein the surface of the second portion is circular, the circular surface having a diameter that is the same as the diameter of the exposed portion of the frozen confectionery.

Clause 12. The novelty frozen confectionery of clause 10 or 11, wherein the surface is configured with a swirl pattern.

Clause 13. The novelty frozen confectionery of clause 10 or 11, wherein the surface is planar.

Clause 14. The novelty frozen confectionery of any one of clauses 3 to 13 wherein the second portion further comprises an outer edge, the outer edge comprising one or more ridges configured to mate with ridges inside the open end of the first portion to index the first portion to the second portion.

Clause 15. The novelty frozen confectionery of clause 14 wherein the ridges are configured to resist (but not prevent) removal of the first portion from the second portion.

Clause 16. The novelty frozen confectionery of any one of clauses 2 to 15 wherein the first portion further comprises a peripheral lip located adjacent the container and wherein the removable wrapper envelops the lip.

Clause 17. The novelty frozen confectionery of clause 16 wherein the peripheral lip extends about the opening of the first portion.

Clause 18. The novelty frozen confectionery of any one of clauses 3 to 17, wherein the second portion further comprises an outer edge having a tab located thereupon.

Clause 19. The novelty frozen confectionery of clause 18, wherein an outer periphery of the first portion comprises a cutout adapted and configured so that the tab is accessible through the cutout.

Clause 20. The novelty frozen confectionery of any one of clauses 3 to 19 wherein the first and second portions are push-fit engaged to each other.

Clause 21. The novelty frozen confectionery of any one of clauses 3 to 19 wherein the first and second portions are snap-fit engaged to each other.

Clause 22. The novelty frozen confectionery of any one of clauses 3 to 19 wherein the first and second portions are frangibly engaged to each other.

Clause 23. The novelty frozen confectionery of any one of clauses 3 to 19 wherein the first and second portions are tear-away engaged to each other.

Clause 24. The novelty frozen confectionery of any one of clauses 3 to 19 wherein the first and second portions are adhesive tack-engaged to each other.

Clause 25. The novelty frozen confectionery of any one of clauses 3 to 19 wherein the first and second portions are hingedly engaged to each other.

Clause 26. The novelty frozen confectionery of any one of clauses 3 to 19 wherein the first and second portions are hingedly engaged to each other utilizing a live hinge.

Clause 27. The novelty frozen confectionery of any one of clauses 3 to 19 wherein the first and second portions are threadedly engaged to each other.

Clause 28. The novelty frozen confectionery of any one of clauses 2 to 26 wherein the first portion is generally of a shape selected from one of:
(a) a hemispherical dome,
(b) a faceted cover,
(C) a simulated single, double or triple ice cream scoop shape,
(d) a crown,
(e) a cylinder.

Clause 29. The novelty frozen confectionery of any one of the preceding claims wherein the novelty item is a toy.

Clause 30. The novelty frozen confectionery of any one of the preceding claims wherein the novelty item is wholly contained in the capsule.

Clause 31. The novelty frozen confectionery of any one of the preceding claims wherein the novelty item is a unitary item.

Clause 32. The novelty frozen confectionery of any one of clauses 1 to 30 wherein the novelty item comprises of individual components able to be assembled into an item once removed from the capsule.

Clause 33. The novelty frozen confectionery of clauses 32 wherein the individual components are contained in a flexible pouch inside the capsule.

Clause 34. The novelty frozen confectionery of any one of the preceding claims wherein the container is an at least partially edible container.

Clause 35. The novelty frozen confectionery of clause 34 wherein the container is an entirely edible container.

Clause 36. The novelty frozen confectionery of clause 34 or 35 wherein the container is a cone.

Clause 37. The novelty frozen confectionery of clause 36 wherein the container is a waffle cone.

Clause 38. The novelty frozen confectionery of any one of the preceding claims wherein the container is a non-edible container.

Clause 39. The novelty frozen confectionery of clause 38 wherein the container is of a cellulose-based material.

Clause 40. The novelty frozen confectionery of any one of the preceding claims wherein the container is of a shape selected from one of (a) conical shape, (b) frustoconical shape and (c) cylindrical shape.

Clause 41. The novelty frozen confectionery of any one of the preceding claims wherein the removeable wrapper comprises of a shrink or elastic wrap to facilitate the consolidation of the container to the capsule.

Clause 42. The novelty frozen confectionery of any one of the preceding claims wherein the removable wrapper extends over the entire capsule.

Clause 43. The novelty frozen confectionery of any one of the preceding claims wherein the removeable wrapper includes a frangible region to facilitate the removing of the wrapper from the container and capsule.

Clause 44. The novelty frozen confectionery of any one of the preceding claims wherein the container comprises a top opening at where the frozen confectionery is able to be exposed for consumption.

Clause 45. The novelty frozen confectionery of clause 44 wherein the top opening is defined by a rim of the container.

Clause 46. The novelty frozen confectionery of clause 45 wherein the capsule is seated onto the rim of the container.

Clause 47. The novelty frozen confectionery of clause 46 wherein the capsule is seated in a manner to conceal the top opening and the frozen confectionery in the container.

Clause 48. A method of manufacturing a novelty frozen confectionery, the method comprising:
filling a container with frozen confectionery;
inserting a novelty item into a compartment of a non-edible capsule;
seating the capsule above the container; and
applying a removable wrapper to encompass at least a portion of the container and at least a portion of the non-edible capsule to thereby consolidate the capsule to the container in a removable manner.

Clause 49. The method of clause 48, wherein the capsule comprises a surface configured with a swirl pattern, and seating of the capsule involves pressing it into an exposed portion of the frozen confectionery to form a complementary swirl patten in the exposed portion.

Clause 50. The method of clause 49, wherein pressing the capsule into the exposed portion of the frozen confectionery is performed before the frozen confectionery is fully frozen.

## Claims

1. A novelty confectionery, comprising:
a container containing a frozen confectionery;
a non-edible capsule defining a compartment;
a novelty item located in the compartment; and
a removable wrapper encompassing, in a first state, at least a portion of the container and at least a portion of the non-edible capsule to consolidate the capsule to the container in a removable manner.

2. The novelty confectionery of claim 1 wherein the non-edible capsule comprises:
a first portion comprising an opening through which the novelty item can pass; and
a second portion removably attached to the first portion; and
wherein:
the first portion and second portion are configured to define the compartment;
the novelty item is disposed in the compartment; and
the removable wrapper encompasses at least a portion of the container and at least a portion of at least one of the first and second portions of the capsule to consolidate the container to the capsule in a removable manner.

3. The novelty confectionery of claim 2, wherein the first portion comprises a hood and the second portion comprises a closure that is removably attached to the hood.

4. The novelty confectionery of claim 2, wherein the frozen confectionery extends beyond the container by an exposed portion, wherein a distal end of the exposed portion is adjacent the opening of the first portion of the capsule, and wherein the opening of the first portion has a perimeter having a shape that is complementary to the shape of a perimeter of the distal end of the exposed portion of the frozen confectionery.

5. The novelty confectionery of claim 4, wherein the wrapper encompasses at least a portion of the container, the exposed portion of the frozen confectionery, and at least a portion of the capsule to consolidate the container to the capsule in a removable manner.

6. The novelty confectionery of claim 4, wherein the opening of the first portion of the capsule has a diameter that is approximately the same as the diameter of the exposed portion of the frozen confectionery.

7. The novelty confectionery of claim 2, wherein the second portion of the capsule comprises a surface in contact with a distal end of the exposed portion of the frozen confectionery, the surface of the second portion of the capsule having a perimeter having a shape that is approximately the same shape as the perimeter of the distal end of the exposed portion of the frozen confectionery.

8. The novelty confectionery of claim 7, wherein the surface of the second portion of the capsule is configured with a swirl pattern.

9. The novelty confectionery of claim 2, wherein the second portion of the capsule further comprises an outer edge, the outer edge comprising one or more ridges configured to mate with ridges inside the open end of the first portion of the capsule to index the first portion to the second portion, wherein the ridges are configured to resist (but not prevent) removal of the first portion from the second portion.

10. The novelty confectionery of claim 2, wherein the first portion of the capsule comprises a peripheral lip disposed at an angle matching that of the container, and wherein the removable wrapper folds over the lip to consolidate the capsule to the container.

11. The novelty confectionery of claim 2, wherein the second portion of the capsule further comprises an outer edge having a tab.

12. The novelty confectionery of claim 11, wherein an outer periphery of the first portion of the capsule comprises a cutout configured such that the tab of the second portion is accessible through the cutout.

13. The novelty confectionery of claim 1, wherein the novelty item is a toy.

14. The novelty confectionery of claim 13, wherein the toy is formed from a plurality of individual components contained in a flexible pouch inside the non-edible capsule.

15. The novelty confectionery of claim 1, wherein the container is at least partially edible.

16. The novelty confectionery of claim 15, wherein the container is an edible cone.

17. The novelty confectionery of claim 16, wherein the container is an edible waffle cone.

18. The novelty confectionery of claim 1, wherein the removable wrapper encompasses the entire non-edible capsule.

19. The novelty confectionery of claim 1, wherein the removeable wrapper includes a frangible region to facilitate the removing of the wrapper from the container and non-edible capsule.

20. The novelty confectionery of claim 1, wherein the frozen confectionery extends beyond the container by an exposed portion, and wherein the capsule is seated in a manner to conceal the frozen confectionery in the removable wrapper when the capsule is consolidated with the container by the wrapper.
